# EUROPEAN PATENT APPLICATION

(11) **EP 0 825 793 A1**
(43) Date of publication of application: **25.02.1998**
(21) Application number: 97202440.0
(22) Date of filing: 06.08.1997
(51) Int. Cl.: H04Q 7/34

(54) **Method and device for displaying stored mobile telecommunication system related data**

(30) Priority: 15.08.1996 NL 1003817
(71) Applicant: Koninklijke PTT Nederland N.V., 9726 AE Groningen (NL)
(72) Inventor: Glas, Robert Klaas, c/o KPN Research, 2264 XZ Leidschendam (NL)

(57) **Abstract**

Prior art methods for displaying mobile telecommunication system related data stored in memory means provide insufficient opportunity for studying the functioning of the mobile telecommunication system properly. By both displaying telecommunication nodes such as base stations, base station controllers and mobile switching centres, as well as displaying interactions between these telecommunication nodes, said interactions for example comprising handovers or antenna directions, clarity is soon provided as to improvements which can be made to the mobile telecommunication system.

## Description

### A. BACKGROUND OF THE INVENTION

The invention relates to with a method for displaying mobile telecommunication system related data which are stored in memory means, said method comprising the steps of:
- selecting in the memory means at least one telecommunication node code and a related coordinates code, and
- displaying in a predetermined manner a telecommunication node which is defined by said telecommunication node code, and which is located at a site which is defined by the related coordinates code.

Such a method is known from WO 94/28650. Herein is described that certain information can be selected from a database, which information must be correlated with cells of the mobile telecommunication system, after which the correlated information must be displayed by application of polygons. The centres of the polygons drawn in FIG. 3 of WO 94/28650 could in this case be regarded as telecommunication nodes. Thus the kind of interference occurring in the mobile telecommunication system and the consequences of certain channel allocations can be examined, given the environment in which the mobile telecommunication system is situated.

Such a method has inter alia as disadvantage that, in order to be able to make improvements to the mobile telecommunication system, the application of said method provides insufficient opportunity to study the functioning of the mobile telecommunication system.

### B. SUMMARY OF THE INVENTION

The object of the invention is inter alia to provide a method of the kind mentioned in the preamble which offers the possibility of being able to study the functioning of the mobile telecommunication system in such a way that the improvements to be made to the mobile telecommunication system become clear at one glance.

The method according to the invention is thereto characterised in that the method comprises the steps of
- selecting further telecommunication node codes in the memory means on the basis of the related further coordinates codes and said coordinates code,
- displaying in a predetermined manner further telecommunication nodes which are defined by the further telecommunication node codes and which are located at sites which are defined by the related further coordinates codes,
- selecting in the memory means at least a portion of the data related to at least one interaction between said telecommunication node on the one hand and at least one further telecommunication node on the other hand, and
- displaying in a predetermined manner at least a portion of the data.

By both displaying the telecommunication node defined by the telecommunication node code in a predefined manner, as well as displaying a number of the further telecommunication nodes defined by the telecommunication node codes in a predefined manner, where the selection of the number of further telecommunication nodes takes place on the basis of the coordinates code related to said telecommunication node and the further coordinates codes related to the further telecommunication nodes, and by displaying in a predetermined manner at least a portion of the data related to at least one interaction between said telecommunication node on the one hand and at least one further telecommunication node on the other hand, it is achieved that the functioning of the mobile telecommunication system can be studied in such a way that improvements to be made to the mobile telecommunication system become clear sooner.

The said selection, which should take place only if it is impossible or injudicious to display all telecommunication nodes on a screen or a piece of paper simultaneously, takes place on the basis of coordinates codes, because of the fact that the chance of an interaction between telecommunication nodes situated in each others proximity is in general greater than the chance of an interaction between telecommunication nodes situated at a large distance from each other. Selection on the basis of the telecommunication node codes and/or other codes could also take place, but in practice this always amounts to selection on the basis of coordinates codes, because of the fact that in particular the interaction between telecommunication nodes situated in each others proximity is of the most importance. The interaction, which, for example, relates to the telecommunication traffic volume measured during a certain interval of time between two telecommunication nodes, could be displayed by means of numbers and arrowed lines, differentiation possibly being designated by application of colours and/or line thicknesses and/or line types and/or symbols.

The invention is based inter alia on the insight that by application of known methods it is hitherto only possible to study mobile telecommunication systems on the basis of displayed cells, whilst in particular the interaction between telecommunication nodes provides clarity regarding the functioning of such a mobile telecommunication system.

Thus, the problem of being unable to sufficiently study the functioning of the mobile telecommunication system is solved by displaying at least one interaction between the telecommunication node and at least one further telecommunication node. The inventiveness of this solution with regard to the state of the art in the form of WO 94/28650 appears only too obviously if the extremely theoretical embodiment shown in FIG. 3 of WO 94/28650 and the in practice extremely so well usable invention are set side by side.

A first embodiment of the method according to the invention is characterised in that the interaction comprises a handover.

Due to the fact that the interaction comprises a handover, which, for example, is denoted by an arrowed line, while directly next to the line a proportional number could be displayed representing the number of successful handovers with regard to the total number of attempted handovers, it can be determined in a simple manner whether the mobile telecommunication system functions correctly.

A second embodiment of the method according to the invention is characterised in that at least two telecommunication nodes each comprise a base station, said handover relating to a base station handover.

Due to the fact that at least two telecommunication nodes each comprise a base station, said handover relating to a base station handover, it can be determined in a simple manner whether handovers between base stations which are situated in each others proximity are possible or not, and whether the number of handovers which can be effected should be extended or not.

A third embodiment of the method according to the invention is characterised in that at least two telecommunication nodes each comprise a base station controller, said handover comprising a base station controller handover.

Due to the fact that at least two telecommunication nodes each comprise a base station controller, said handover comprising a base station controller handover, it can be determined in a simple manner whether handovers between the base stations of base station controllers which are situated in each others proximity are possible or not, and whether the number of handovers which can be effected, and/or the number of base stations per base station controller, should be extended or not.

A fourth embodiment of the method according to the invention is characterised in that at least two telecommunication nodes each comprise a mobile switching centre, the handover comprising a mobile switching centre handover.

Due to the fact that at least two telecommunication nodes each comprise a mobile switching centre, said handover comprising a mobile switching centre handover, it can be determined in a simple manner whether handovers between the base stations, and via base station controllers of mobile switching centres which are situated in each others proximity, are possible or not, and whether the number of handovers which can be effected, and/or the number of base stations per base station controller and/or the number of base station controllers per mobile switching centre should be extended or not.

A fifth embodiment of the method according to the invention is characterised in that the interaction comprises an antenna direction of an antenna, at least one telecommunication node comprising a base station.

Due to the fact that the interaction comprises an antenna direction of an antenna, at least one telecommunication node comprising a base station, it can be determined in a simple manner whether the number of antennae and the antenna direction per antenna have been correctly chosen and/or should be modified or not, given the antennae and the antenna direction per antenna of the neighbouring base stations.

The invention further relates to a device for displaying mobile telecommunication system related data stored in memory means, said device being provided with
- selection means for selecting in the memory means at least one telecommunication node code and a related coordinates codes, and
- display means for displaying, in a predetermined manner, a telecommunication node which is defined by the telecommunication node code and which is located at a site defined by the related coordinates code.

The device according to the invention is characterised in that the device is provided with
- further selection means for selecting in the memory means further telecommunication node codes on the basis of the related further coordinates codes and said coordinates code,
- still further selection means for selecting in the memory means at least a portion of the data related to at least one interaction between the telecommunication node on the one hand and at least one further telecommunication node on the other hand,
further telecommunication nodes being displayed, via the display means in a predetermined manner, which are defined by the further telecommunication node codes and which are located at sites defined by the related further coordinates codes, and at least a portion of the data being displayed in a predetermined manner.

A first embodiment of the device according to the invention is characterised in that the interaction comprises a handover.

A second embodiment of the device according to the invention is characterised in that at least two telecommunication nodes each comprise a base station, said handover relating to a base station handover.

A third embodiment of the device according to the invention is characterised in that at least two telecommunication nodes each comprise a base station controller, said handover comprising a base station controller handover.

A fourth embodiment of the device according to the invention is characterised in that at least two telecommunication nodes each comprise a mobile switching centre, said handover comprising a mobile switching centre handover.

A fifth embodiment of the device according to the invention is characterised in that the interaction comprises an antenna direction of an antenna, at least one telecommunication node comprising a base station.

### C . REFERENCES

■ WO 94/28650

All references are deemed to be incorporated in this patent application.

### D. EXEMPLARY EMBODIMENT

The invention will be further explained with reference to an exemplary embodiment shown in the figures. In this regard:
FIG. 1 shows a device according to the invention, and
FIG. 2 shows display means for displaying mobile telecommunication system related data stored in memory means.

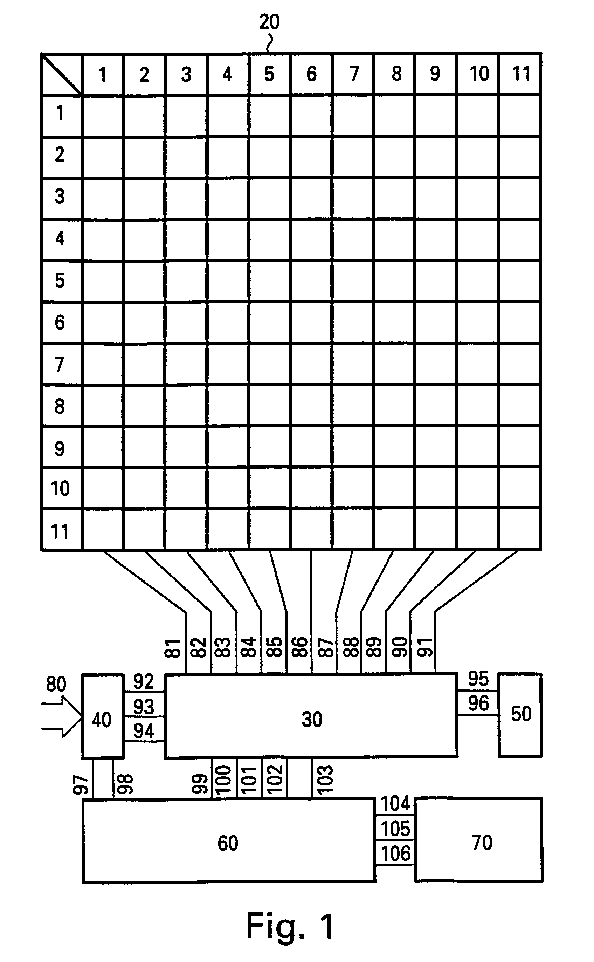

The device shown in FIG. 1, according to the invention, comprises memory means 20, which in this example are provided with eleven columns 1-11 and eleven rows 1-11. Said memory means 20 are connected, via eleven connections 81-91, to processor means 30, which, via two connections 95,96, are connected to a working memory 50, and, via three connections 92-94, are connected to an input memory 40, and, via five connections 99-103, are connected to a video device 60. Said input memory 40 is provided with an input 80 and is connected, via two connections 97,98, to said video device 60, which, via three connections 104-106, is connected to display means 70.

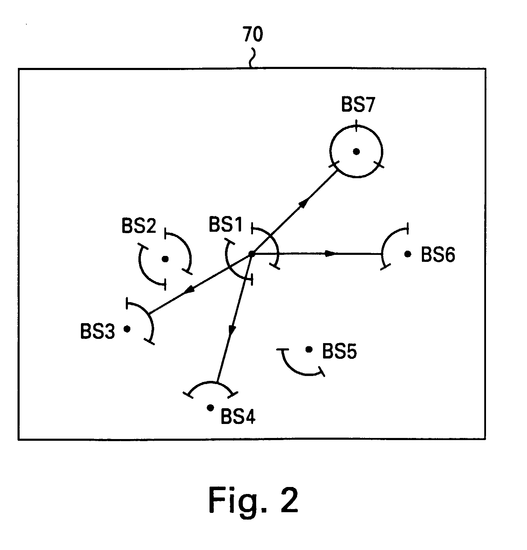

Said display means 70 shown in FIG. 2 provide an overview of seven base stations BS1-BS7 and show, per base station, an antenna beam of an antenna related to said base station. Further, by means of outgoing arrows, prospective handover possibilities from base station BS1 to other base stations are shown.

In Table 1, possible contents of said memory means 20 are shown, the numbers of the columns and rows in said Table 1 corresponding to the numbers in said memory means 20 shown in FIG. 1.

**Table 1**

| | 1 | 2 | 3 | 4 | 5 | 6 |
|---|---|---|---|---|---|---|
| 1 | BS1 | 100,100 | 1-1 | 0-120 | BS7 | |
| | BS1 | 100,100 | 1-1 | 0-120 | BS6 | |
| | BS1 | 100,100 | 1-2 | 180-300 | BS4 | |
| | BS1 | 100,100 | 1-2 | 180-300 | BS3 | |
| 2 | BS2 | 80,100 | 2-1 | 0-120 | BS13 | |
| | BS2 | 80,100 | 2-1 | 0-120 | BS7 | |
| | BS2 | 80,100 | 2-2 | 240-300 | BS3 | |
| | BS2 | 80,100 | 2-2 | 240-300 | BS14 | |
| 3 | BS3 | 70,90 | 3-1 | 0-120 | BS2 | |
| | BS3 | 70,90 | 3-1 | 0-120 | BS1 | |
| 4 | BS4 | 90,70 | 4-1 | 300-60 | BS3 | |
| | BS4 | 90,70 | 4-1 | 300-60 | BS1 | |
| 5 | BS5 | 110,80 | 5-1 | 150-270 | BS4 | |
| 6 | BS6 | 130,100 | 6-1 | 240-360 | BS1 | |
| | BS6 | 130,100 | 6-1 | 240-360 | BS7 | |
| 7 | BS7 | 120,120 | 7-1 | 0-120 | BS13 | |
| | BS7 | 120,120 | 7-2 | 120-240 | BS6 | |
| | BS7 | 120,120 | 7-2 | 120-240 | BS1 | |
| | BS7 | 120,120 | 7-3 | 240-360 | BS2 | |
| 8 | | | | | | |
| 9 | | | | | | |

The operation of the device shown in FIG. 1, given the possible contents of the memory means 20 shown in Table 1, is as follows, and leads to the overview which is displayed by the display means 70 shown in FIG. 2. Once only, via input 80 of the input memory 40, the manner in which a telecommunication node, defined by a telecommunication node code, is to be displayed must be entered, as well as the manner in which an antenna device / aperture angle of an antenna is to be displayed. This takes place, for example, by entering a general version of a telecommunication node code, being BSx (see column 1 of Table 1), in which the letters BS indicate that said telecommunication node concerns a base station and in which x is the sequence number of said base station, and by entering a general version of a coordinates code, being y,z (see column 2 of Table 1), related to the telecommunication node concerned, in which said numbers y and z represent a horizontal and vertical position, and by entering a general version of an antenna number m-n (see column 3 of Table 1), in which said numbers m and n represent the sequence number of the related telecommunication node and the antenna sequence number, and by entering a general version of an antenna device / aperture angle v-w (see column 4 of Table 1), in which said numbers v and w represent the antenna beam borders which define the antenna aperture angle, the antenna direction then, for example, being determined by the midpoint of said numbers v and w. Further, presentation data must of course be entered which result in a telecommunication node in the form of a base station being displayed, for example, as a dot, and presentation data must be entered which result in the antenna related to a base station being displayed, for example, as a sector of a circle encompassing said dot, and presentation data must be entered which result in a handover possibility to a further telecommunication node (see column 5 of Table 1) being displayed, for example, as an outgoing arrow from said telecommunication node to said further telecommunication node.

The processor means 30 subsequently select a telecommunication node code and a related coordinates code, such as, for example, BS1 and 100,100 which are stored in row 1 of Table 1, by reading out these data from the memory means 20 via the connections 81 and 82, and feeding them to the working memory 50, via the connections 95 and 96, for temporary storage.

For example, if it is not possible or judicious to display simultaneously, via the display means 70, all telecommunication nodes stored in memory means 20, the processor means 30 subsequently select further telecommunication nodes, for example on the basis of coordinates codes. Thus the processor means 30 could, in response to the coordinates code 100,100, define a window having a width of 100 and a height of 80, which results in only those telecommunication nodes further being selected which are located within the window designated by the four vertices 50,140 and 150,140 and 50,60 and 150,60. As a consequence, the processor means 30 read out the further telecommunication node codes and related coordinates codes, in this case BS2 and 80,100, which are located in row 2 of Table 1, BS3 and 70,90, which are located in row 3 of Table 1, BS4 and 90,70, which are located in row 5 of Table 1, BS5 and 110,80, which are located in row 6 of Table 1, and BS7 and 120,120 which are located in row 7 of Table 1, by reading out said data from the memory means 20 via the connections 81 and 82 and feeding them, via connections 95 and 96, to the working memory 50 for temporary storage.

The processor means 30 subsequently feed, via the connections 95 and 96 and via the connections 99 and 100, the telecommunication node codes and related coordinates codes which are stored in the working memory 50 to the video device 60, the telecommunication node codes which are stored in working memory 50 also being fed, via connection 92, to the input memory 40, which feeds the related presentation data to the video device 60 via the connections 97 and 98.

Furthermore, the processor means 30 read out, per telecommunication node code which is stored in the working memory 50, the related antenna numbers via the connection 83, and the related antenna directions / aperture angles via the connection 84, and the related handover possibilities via the connection 85. Thus, for example, row 1 of Table 1, where the telecommunication node code BS1 and coordinates code 100,100 are stored, is subdivided into four sub-rows: in column 3 of the first and the second sub-row a first antenna number 1-1 is stored, with an antenna direction / aperture angle of 0-120 degrees in column 4, and with a handover possibility to BS7 in column 5 of the first sub-row, and with a handover possibility to BS6 in column 5 of the second sub-row; in column 3 of the third and the fourth sub-row, a second antenna number 1-2 is stored, with an antenna direction / aperture angle of 180-300 degrees in column 4, and with a handover possibility to BS4 in column 5 of the third sub-row, and with a handover possibility to BS3 in column 5 of the fourth sub-row.

The processor means 30 subsequently feed said antenna numbers and antenna directions / aperture angles and handover possibilities to the video device 60 via the connections 101 and 102 and 103, the antenna directions / aperture angles and handover possibilities also being fed, via the connections 93 and 94, to the input memory 40, which feeds the related presentation data to the video device 60 via the connections 97 and 98.

On the basis of all said data, the video device 60 feeds signals, via the connections 104, 105 and 106, to the display means 70, the embodiment of which, for example, is a video screen, said display means showing the overview represented in FIG. 2 in response to said signals. From said overview it is directly evident that the functioning of the mobile telecommunication system can be strongly improved if, firstly, an additional handover possibility is permitted from BS1 to BS2, it also being evident from the overview that the antennae of BS1 and BS2, which are already present, are suitable hereto, and if, secondly, an additional handover possibility is permitted from BS1 to BS5, which does either require that both BS1 and BS2 be provided with an additional antenna, or that the beams of the already present antennae of BS1 and BS2 be adapted (the latter does not deserve preference since the said adaptation influences the rest of the system). Thus it is clear at first glance in which manner the functioning of the mobile telecommunication system can be improved, said manner not, or only with great difficulty, being inferable purely and solely on the basis of the letters and figures in Table 1.

The entity shown in FIG. 1 and FIG. 2 is only an exemplary embodiment, for which many alternatives are possible. Accordingly, the display means 70 could be implemented not only by a video screen, but, for example, also by a printer or projector. Furthermore, the manner in which a telecommunication node and an antenna direction / aperture angle and a handover possibility are shown is absolutely arbitrary, and many other interactions further being conceivable and capable of representation (for example, the relationship per handover possibility shown between the number of successful handovers with respect to the number of attempted handovers, which relationship could, for instance, be stored in column 6 of Table 1, and/or, for instance, handover possibilities from the further telecommunication nodes BS2-BS7 to the telecommunication node BS1, which could be inferred from the rows 2-7 of Table 1). Neither should it be ruled out that the means and devices shown in FIG. 1 are, in a geographical sense, separately implemented, in which case the mutual communication could take place via a network. The overview shown in FIG. 2 could further be provided with a background in which, for example, cities, motorways, rivers, etc. could be shown.

In column 7 of Table 1, for example, a higher telecommunication node code could be stored, such as a code of a base station controller (BSC) with which the base station is connected, and in column 8 of Table 1 a yet higher telecommunication node code could be stored, such as a code of a mobile switching centre (MSC) with which the base station is connected. Further on in Table 1, for example as of row 1001 (if, for instance, 1000 base stations were to exist) said higher telecommunication node codes in column 1, together with the related coordinates codes in column 2, could be stored. As a result of this, the functioning of the mobile telecommunication system at a higher level could be shown, the interaction between two telecommunication nodes being formed by the traffic volume, or (via base stations connected to said two telecommunication nodes) the possible and/or attempted and/or successful base station controller handovers and/or mobile switching centre handovers.

The processor means 30 shown in FIG. 1 thus function as selection means for selecting in the memory means at least one telecommunication node code and a related coordinates codes, as further selection means for selecting in the memory means further telecommunication node codes on the basis of the related further coordinates codes and said coordinates code, and as still further selection means for selecting in the memory means at least a portion of the data related to at least one interaction between said telecommunication node on the one hand and at least one further telecommunication node on the other hand. In particular, the function of the further selection means is not necessary per se: both the possibility of entirely not selecting further telecommunication node codes, as well as the possibility of selecting further telecommunication node codes on the basis of other criteria, should not be ruled out. Further, certain parts of the means and devices shown in FIG. 1 could be implemented not only completely by means of hardware, but also completely by means of software, as well as partially by means of hardware and partially by means of software.

## Claims

1. Method for displaying mobile telecommunication system related data stored in memory means, said method comprising the steps of
- selecting in the memory means at least one telecommunication node code and a related coordinates code, and
- displaying in a predetermined manner a telecommunication node which is defined by the telecommunication node code, and which is located at a site which is defined by the related coordinates code,
characterised in that the method comprises the steps of
- selecting further telecommunication node codes in the memory means on the basis of the related further coordinates codes and said coordinates code,
- displaying in a predetermined manner further telecommunication nodes which are defined by the further telecommunication node codes and which are located at sites which are defined by the related further coordinates codes,
- selecting in the memory means at least a portion of the data related to at least one interaction between the telecommunication node on the one hand and at least one further telecommunication node on the other hand, and
- displaying in a predetermined manner at least a portion of the data.

2. Method according to Claim 1, characterised in that the interaction comprises a handover.

3. Method according to Claim 2, characterised in that at least two telecommunication nodes each comprise a base station, said handover relating to a base station handover.

4. Method according to Claim 2 or 3, characterised in that at least two telecommunication nodes each comprise a base station controller, said handover comprising a base station controller handover.

5. Method according to Claim 2, 3 or 4, characterised in that at least two telecommunication nodes each comprise a mobile switching centre, the handover comprising a mobile switching centre handover.

6. Method according to Claim 1, 2, 3, 4 or 5, characterised in that the interaction comprises an antenna direction of an antenna, at least one telecommunication node comprising a base station.

7. Device for displaying mobile telecommunication system related data stored in memory means, said device being provided with
- selection means for selecting in the memory means at least one telecommunication node code and a related coordinates codes, and
- display means for displaying, in a predetermined manner, a telecommunication node which is defined by the telecommunication node code and which is located at a site defined by the related coordinates code,
characterised in that the device is provided with
- further selection means for selecting in the memory means further telecommunication node codes on the basis of the related further coordinates codes and said coordinates code,
- still further selection means for selecting in the memory means at least a portion of the data related to at least one interaction between said telecommunication node on the one hand and at least one further telecommunication node on the other hand,
further telecommunication nodes being displayed, via the display means in a predetermined manner, which are defined by the further telecommunication node codes and which are located at sites defined by the related further coordinates codes, and at least a portion of the data being displayed in a predetermined manner.

8. Device according to Claim 7, characterised in that the interaction comprises a handover.

9. Device according to Claim 8, characterised in that at least two telecommunication nodes each comprise a base station, said handover relating to a base station handover.

10. Device according to Claim 8 or 9, characterised in that at least two telecommunication nodes each comprise a base station controller, said handover comprising a base station controller handover.

11. Device according to Claim 8, 9 or 10, characterised in that at least two telecommunication nodes each comprise a mobile switching centre, said handover comprising a mobile switching centre handover.

12. Device according to Claim 7, 8, 9 10 or 11, characterised in that the interaction comprises an antenna direction of an antenna, at least one telecommunication node comprising a base station.
